# EUROPEAN PATENT APPLICATION

(11) **EP 2 426 941 A1**
(43) Date of publication of application: **07.03.2012**
(21) Application number: 11007110.7
(22) Date of filing: 01.09.2011
(51) Int. Cl.: H04N 21/458, H04N 21/41, H04N 21/482, H04N 21/658, G11B 27/10

(54) **Content replay system, control device and replay device**

(30) Priority: 02.09.2010 JP 2010197154
(71) Applicant: Yamaha Corporation, Hamamatsu-shi, Shizuoka (JP)
(72) Inventor: Maekawa, Masahide, Hamamatsu-shi Shizuoka (JP)
(74) Representative: Wimmer, Hubert

(57) **Abstract**

Continuous play of content can be realized by a play device while suppressing an increase in communication volume between a control device and a play device. A radio communication terminal that is the control device generates a first play list in which plural content to be played in a content play device is listed in a play order, in conformity to a rule indicated by sort information shared by a content play device, on the basis of attribute information indicative of an attribute of the content. The radio communication terminal accepts the operation of designating head play content and the operation of changing the play order with the use of a first play list, designates the content, and transmits a play instruction. The content play device generates a second play list in which the content is listed in the play order, in conformity to the rule indicated by the sort information, on the basis of the play instruction and the attribute information indicative of the attribute of the content, and sequentially plays the content in the play order conforming to the second play list with the start of the head play content.

## Description

### BACKGROUND OF THE INVENTION

### Technical Field

The present invention relates to a technology for continuously playing content.

### Background Art

There has been known a play system for content including a play device that plays the content acquired from a content server, and a controller that controls the operation of the play device. For example, JP-A-2007-287196 discloses that the controller creates a play list that lists the content in the play order, and allows the play device to continuously play plural pieces of content in the play order listed on the play list.

### SUMMARY OF THE INVENTION

In the technique disclosed in JP-A-2007-287196, the controller transmits a next play reservation for reserving the content to be next played to the play device every time the play of the content is completed by the play device. In this technique, a communication volume for next play reservation may be increased between the controller and the play device. For example, when a power supply of the controller is turned off during continuous play of the content, the continuous play is interrupted.

An object of the invention is to realize the continuous play of the content by the play device while suppressing an increase in the communication volume between the controller and the play device.

In order to achieve the above-described object, according to one aspect of the invention, there is provided a content play system including a play device that acquires content stored in a storage device to play the content, and a controller that controls the play device through communication, in which the controller includes a first attribute information acquisition unit that acquires attribute information indicative of an attribute of the content to be played by the play device; a first rule acquisition unit that acquires rule information indicative of a rule to be followed in determining a play order of a plurality of content to be played by the play device; a first play list generation unit that generates a first play list in which the plurality of content is listed in the play order according to the rule indicated by the rule information acquired by the first rule acquisition unit, on the basis of the attribute information acquired by the first attribute information acquisition unit; an acceptance unit that accepts operation for designating the content to be first played with the use of the first play list generated by the first play list generation unit; and a play instruction transmission unit that designates the content to be first played, which has been accepted by the acceptance unit, and transmits a play instruction for the plurality of content, and in which the play device includes: a second rule acquisition unit that acquires the rule information indicative of a rule common to that acquired by the first rule acquisition unit; a play instruction acquisition unit that acquires a play instruction transmitted by the play instruction transmission unit; a second attribute information acquisition unit that acquires attribute information indicative of an attribute of the content to be played according to the play instruction acquired by the play instruction acquisition unit; and a play unit that sequentially acquires and plays the plurality of content in the play order conforming to the rule indicated by the rule information acquired by the second rule acquisition unit with the start of the designated content to be first played, on the basis of the attribute information acquired by the second attribute information acquisition unit.

According to the aspect of the invention, it is preferable that the play device further includes a second play list generation unit that generates a second play list in which the plurality of content is listed in a play order conforming to the common rule, on the basis of the attribute information acquired by the second attribute information acquisition unit, in which the play unit sequentially acquires and plays the plurality of content in the play order conforming to the second play list generated by the second play list generation unit with the start of the content to be first played.

According to the aspect of the invention, it is preferable that the acceptance unit accepts a change instruction for changing the play order in addition to the content to be first played, the first play list generation unit generates the first play list reflecting substance of the change instruction, the play instruction transmission unit designates the substance of the change instruction in addition to the content to be first played, and transmits the play instruction, and the play unit sequentially plays the plurality of content in the play order reflecting the substance of the change instruction designated by the play instruction.

According to another aspect of the invention, there is provided a controller for controlling a play device which acquires and plays content stored in a storage device through communication, including: an attribute information acquisition unit that acquires attribute information indicative of an attribute of the content to be played by the play device; a rule acquisition unit that acquires rule information indicative of a rule common between the controller and the play device to be followed in determining a play order of a plurality of content to be played by the play device, and shared by the controller and the play device; a play list generation unit that generates a play list in which the plurality of content is listed in a play order in conformity to the rule indicated by the rule information acquired by the rule acquisition unit, on the basis of the attribute information acquired by the attribute information acquisition unit; an acceptance unit that accepts operation for designating the content to be first played with the use of the play list generated by the play list generation unit; and a play instruction transmission unit that designates the content to be first played, which has been accepted by the acceptance unit, and transmits a play instruction for the plurality of content.

According to still another aspect of the invention, there is provided a play device that is controlled by a controller through communication, and acquires and plays content stored in a storage device under the control, including: a rule acquisition unit acquires rule information indicative of a rule common between the controller and the play device to be followed in determining a play order of a plurality of content to be played by the play device, and shared by the controller and the play device; a play instruction acquisition unit that acquires, when content to be first played is designated by the controller with the use of a play list in which the plurality of content is listed in a play order in conformity to the common rule, a play instruction designating the content to be first played from the controller; an attribute information acquisition unit that acquires attribute information indicative of an attribute of the content to be played according to a play instruction acquired by the play instruction acquisition unit; a play list generation unit that generates the play list in which the plurality of content is listed in the play order in conformity to the common rule, on the basis of the attribute information acquired by the attribute information acquisition unit; and a play unit that sequentially acquires and plays the plurality of content in the play order conforming to the play list generated by the play list generation unit with the start of the designated content to be first played.

According to the invention, the continuous play of the content can be realized by the play device while suppressing an increase in the communication volume between the controller and the play device.

### BRIEF DESCRIPTION OF THE DRAWINGS

FIG. 1 is a diagram illustrating an outline configuration of a content play system;
FIG. 2 is a block diagram illustrating a configuration of a radio communication terminal;
FIG. 3 a block diagram illustrating a configuration of a content play device;
FIG. 4 is a block diagram illustrating a configuration of a content server;
FIG. 5 is a diagram illustrating a management structure of content in the content server;
FIG. 6 is a diagram illustrating an example of a structure of a first play list;
FIG. 7 is a diagram illustrating an example of a structure of a second play list;
FIG. 8 is a functional block diagram illustrating a functional structure realized by a control part of the radio communication terminal;
FIG. 9 is a functional block diagram illustrating a functional structure realized by a control part of the content play device;
FIG. 10 is a sequence chart illustrating a flow of processing in the content play system; and
FIGS. 11A and 11B are diagram illustrating examples of structures of first and second play lists, respectively.

### DESCRIPTION OF THE PREFERRED EMBODIMENT

### (Embodiment)

Hereinafter an embodiment of the invention will be described with reference to the accompanying drawings.

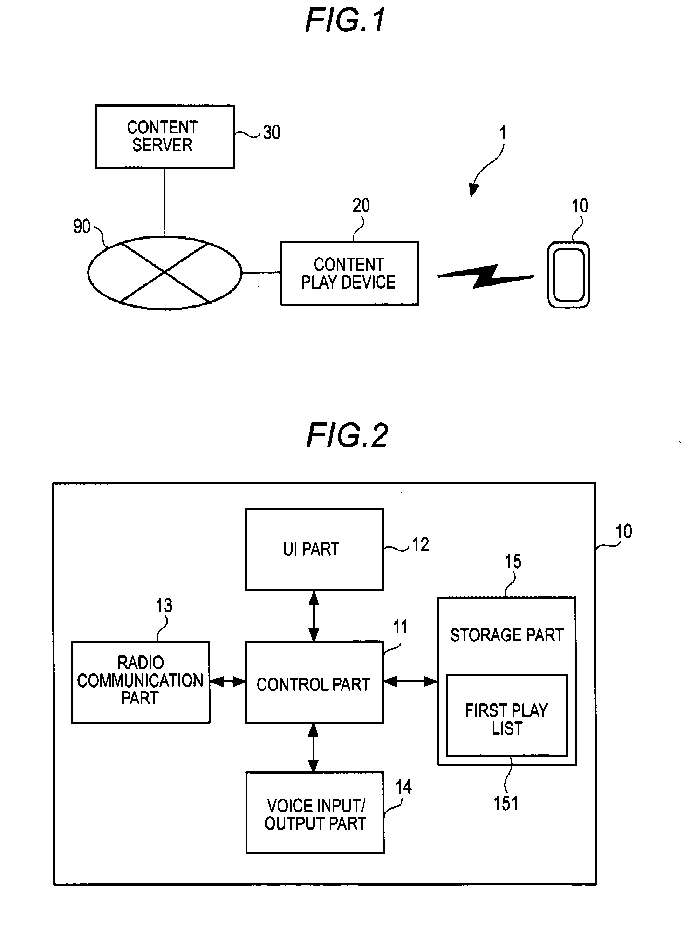

FIG. 1 is a diagram illustrating an outline configuration of a content play system 1. In this example, the content play system 1 is a network AV system based on an UPnP (universal plug and play) that is a protocol for mutual connection between a domestic personal computer and an AV (audio visual) device. The content play system 1 includes a radio communication terminal 10 and a content play device 20. The radio communication terminal 10 is a controller also called "control point", and a smartphone in this example. The content play device 20 is a play device also called "media renderer", and an audio player in this example.

A content server 30 is also called "media server", functions as a storage device that stores the content therein, and transmits the content meeting a request from the content play device 20 in a streaming format. The content stored in the content server 30 is related to music in this example. The content play device 20 communicates with the radio communication terminal 10 by radio, and also communicates with the content server 30 on a communication network 90. The content play device 20 acquires and plays the content from the content server 30 through communication with the content server 30 under the control of the radio communication terminal 10 through radio communication.

In this example, the radio communication terminal 10, the content play device 20, and the content server 30 are one in number, respectively, but may be plural.

FIG. 2 is a block diagram illustrating a configuration of the radio communication terminal 10. As illustrated in FIG. 2, the radio communication terminal 10 includes a control part 11, an UI (user interface) part 12, a radio communication part 13, a voice input/output part 14, and a storage part 15.

The control part 11 is a control unit including an arithmetic device such as a CPU (central processing unit), and a memory. The arithmetic device executes programs stored in the memory and the storage part 15 to control the operation of the radio communication terminal 10. The UI part 12 includes a touch panel, and functions as an operation unit for accepting operation from a user, and a display unit for announcing information with the help of images. The radio communication part 13 is an interface including a radio communication circuit and an antenna, for connection to the content play device 20. The voice input/output part 14 includes a microphone that picks up a received voice, and a speaker that emits a transmitting voice, and realizes a function for inputting and outputting the voice in the radio communication terminal 10.

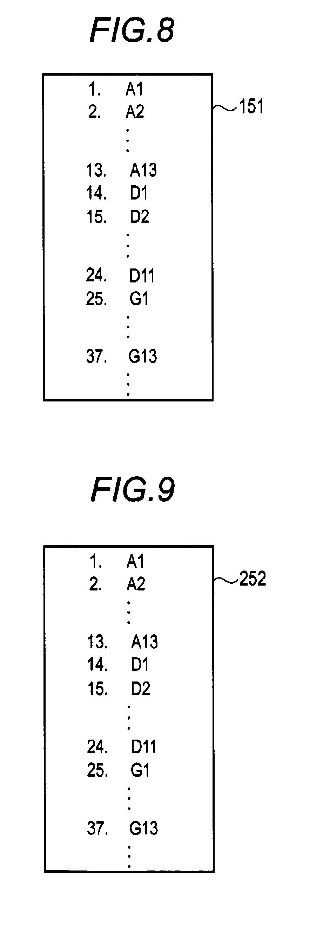

The storage part 15 includes, for example, an EEPROM (electronically erasable and programmable ROM), and stores a variety of programs used by the control part 11 therein. The storage part 15 may further store a first play list 151 therein. The first play list 151 lists a plurality of content to be continuously played by the content play device 20 in a play order. The first play list 151 has a data structure illustrated in, for example, FIG. 8. Referring to FIG. 8, a number at a head of each row such as "1" or "2" indicates the play order, and "A1" or "A2" subsequent to the number is a content identifier for identifying the content to be played. The configuration of the first play list 151 will be described in detail later.

In this embodiment, "continuous play" means that the plurality of content is continuously played one by one.

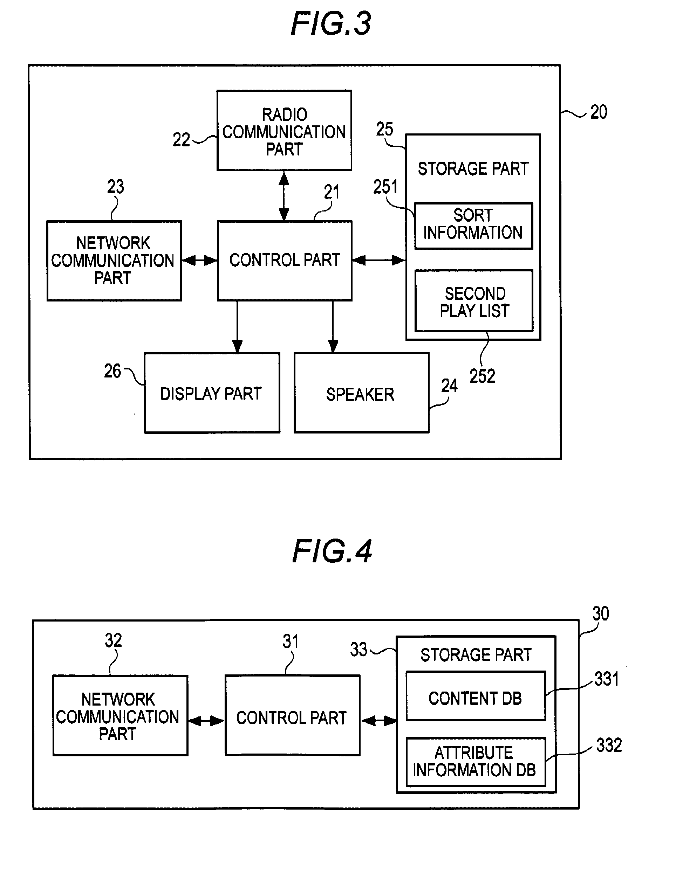

FIG. 3 is a block diagram illustrating a configuration of the content play device 20. As illustrated in FIG. 3, the content play device 20 includes a control part 21, a radio communication part 22, a network communication part 23, a speaker 24, a storage part 25, and a display part 26.

The control part 21 is a control unit having an arithmetic device such as a CPU, and a memory. The arithmetic device executes a program stored in the memory to control the operation of the content play device 20. The radio communication part 22 is an interface including a radio communication circuit and an antenna, for connection to the radio communication terminal 10. The network communication part 23 is an interface for connection to the communication network 90. The speaker 24 is a voice emission part that emits a sound in response to a music signal supplied from the control part 21. The display part 26 is, for example, an FL (fluorescent lamp) display, and displays information on the content which is been played.

The storage part 25 includes, for example, a hard disc device, and stores the program for causing the control part 21 to operate, and sort information 251 therein. The sort information 251 corresponds to rule information of the invention, and represents a rule to be followed in determining the play order of the plurality of content to be continuously played by the content play device 20. More specifically, the sort information 251 is to specify how play of a content group (hereinafter also generically named "album etc.") of a music album including an assembly of plural content (music in this example), or a so-called play list is sorted by default. For example, if the content group is the music album, the sort information 251 specifies that the play order is determined so that track numbers are arranged (sorted) in ascending order. If the content group is the play list, the sort information 251 specifies that the play order follows a play order determined in advance by the content server 30 without changing (sorting) the play order.

Also, the sort information 251 represents a rule to be followed in determining the play order on an album etc. basis when the continuous play is realized over a plurality of albums, etc. The sort information 251 specifies that the play order is determined, for example, so that names (titles) of the plural albums, etc. related to a certain artist (singer) are arranged, for example, in alphabetical order or the order of the Japanese syllabary.

The storage part 25 may further store a second play list 252 therein. The second play list 252 lists a plurality of content to be continuously played by the content play device 20 in the play order in conformity to the rule indicated by the sort information 251. The second play list 252 has, for example, a data structure illustrated in FIG. 9. The data structure of the second play list 252 is basically common to that of the first play list 151. The structure of the second play list 252 will be described in detail later.

FIG. 4 is a block diagram illustrating a configuration of the content server 30. As illustrated in FIG. 4, the content server 30 includes a control part 31, a network communication part 32, and a storage part 33.

The control part 31 is a control unit having an arithmetic device such as a CPU, and a memory. The arithmetic device executes a program stored in the memory to control the operation of the content server 30. The network communication part 32 is an interface for connection to the communication network 90. The storage part 33 has, for example, a hard disc device which stores a program for causing the control part 31 to operate therein, and also has a content DB (data base) 331 and an attribute information DB 332. The content DB 331 is a database that stores the content provided by the content server 30 therein. The attribute information DB 332 is a database that stores attribute information indicative of the attributes of the respective content stored in the content DB 331 therein. The attribute information includes, for example, artist identifiers including the names of the artists for identifying the respective artists, album etc. identifiers including the names of the albums, etc. for identifying the respective albums, etc., content identifiers including the names of the content for identifying the respective content, the play order (for example, track numbers in the music album) in the album, etc. by default, the total number of content configuring the album, etc., copyright protection information, and address information (for example, URI: uniform resource identifier) indicative of the locations of the respective content in the content DB 331. The attribute information includes information necessary for determining the play order when continuously playing the content according to the sort information 251.

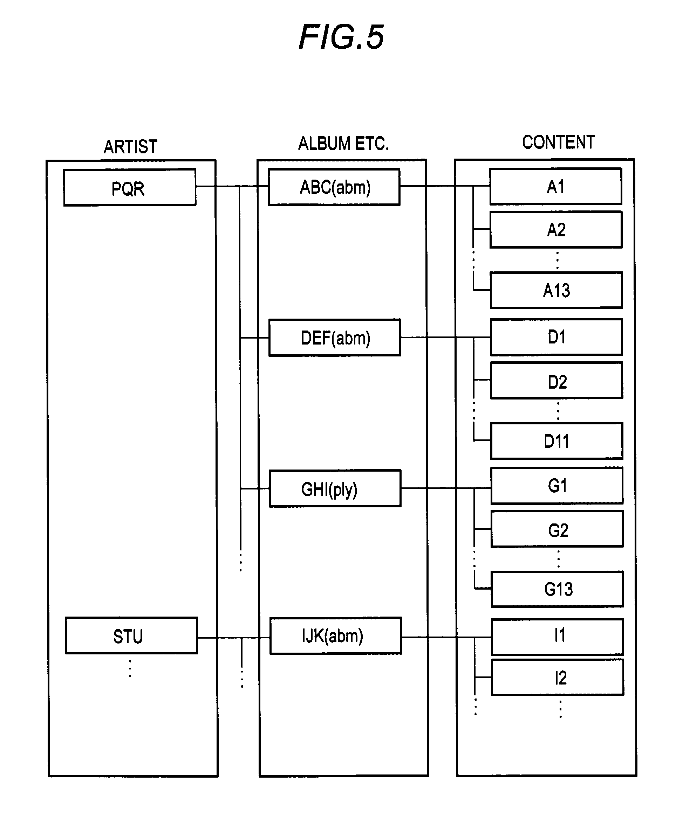

FIG. 5 is a diagram illustrating a management structure of the content in the content server 30. In the content server 30, the respective content is managed with a hierarchical structure illustrated in FIG. 5 on the basis of the attributes indicated by the attribute information. Referring to FIG. 5, alphabets or the combination of an alphabet with a numerical value indicated in each block represents an artist identifier (hierarchy represented as "artist"), an album etc. identifier (hierarchy represented as "album etc."), or a content identifier (hierarchy represented by as "content").

As illustrated in FIG. 5, the respective content stored in the content server 30 is grouped on an artist basis, and further sub-grouped on an album etc. basis of each artist. The grouping can be specified from the artist identifiers and the album etc. identifiers described in the attribute information. Also, in the album etc. identifiers, each identifier described with "abm" in parenthesis means the identifier corresponding to the music album, and each identifier described with "ply" in parenthesis means the identifier corresponding to the play list. Also, in the content identifiers, a numerical value at the end of a symbol in each identifier represents the play order within the album, etc. by default, and particularly corresponds to track number in the music album.

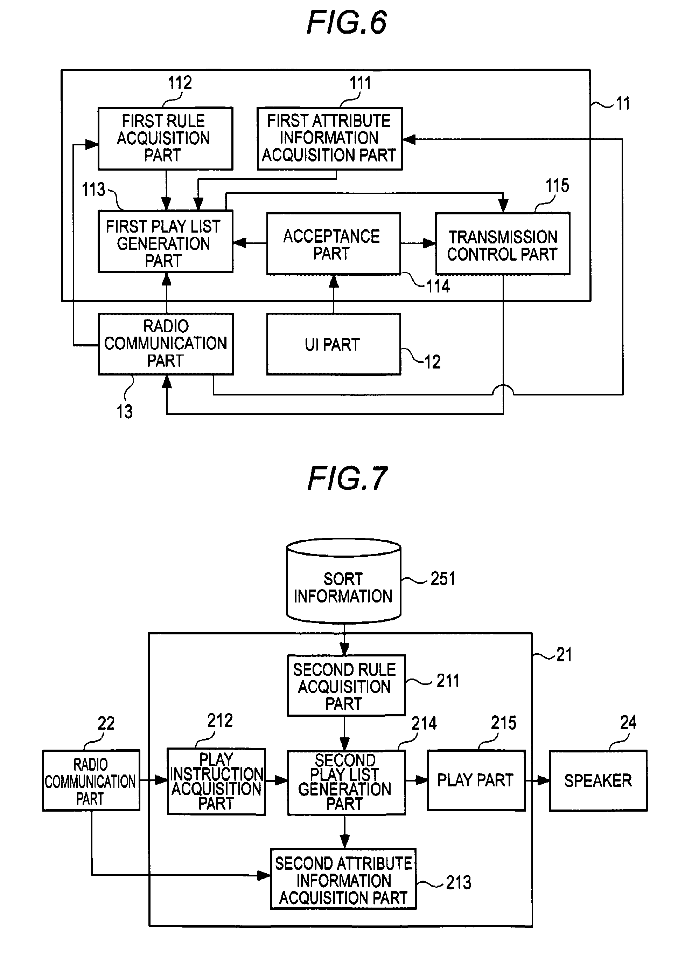

FIG. 6 is a functional block diagram illustrating a functional configuration realized by the control part 11 of the radio communication terminal 10. The control part 11 executes the program to realize functions corresponding to an attribute information acquisition part 111, a first rule acquisition part 112, a first play list generation part 113, an acceptance part 114, and a transmission control part 115.

The attribute information acquisition part 111 corresponds to a first attribute information acquisition unit (attribute information acquisition unit) according to the invention, and acquires the attribute information indicative of the attribute of the content to be played by the content play device 20. In this example, the attribute information acquisition part 111 acquires the attribute information on the content to be played, which has been designated by operating the UI part 12 through the user. If a range of the content to be continuously played is designated such that the artist related to the content to be played is designated, or the album etc. are designated, the attribute information acquisition part 111 acquires the attribute information indicative of the attribute of the designated content.

The first rule acquisition part 112 corresponds to a first rule acquisition unit (rule acquisition unit) of the invention, and acquires information indicative of a rule to be followed in determining the play order of the plural content to be continuously played by the content play device 20. In this example, the first rule acquisition part 112 acquires the sort information 251 by the radio communication part 22 through communication with the content play device 20.

The first play list generation part 113 corresponds to a first play list generation unit (play list generation unit) of the invention, and generates the first play list 151 in which the plural content to be played is listed in the play order, in conformity to the rule indicated by the sort information 251 acquired by the first rule acquisition part 112 on the basis of the attribute information acquired by the attribute information acquisition part 111. For example, when the content the content of the artist identifier "PQR" illustrated in FIG. 5 is continuously played, the first play list generation part 113 generates the first play list 151 of the content illustrated in FIG. 8. In the case of the first play list 151 of the content illustrated in FIG. 8, the first play list generation part 113 generates a play list for continuously playing the respective content in a stated play order of the content identifiers "A1", "A2", ... "A13", "D1", "D2", ... "D11", "G1", ... "G13", .... The first play list 151 includes at least the numerical values indicative of the play order in the continuous play, and the content identifiers. The content identifier includes a character string that uniquely identifies each content. However, the content identifier may be configured by a URI indicative of the location of the content in the content server 30, and may be applied with any information that can uniquely specify the content.

The acceptance part 114 corresponds to an acceptance unit of the invention, and accepts the operation of designating the content (hereinafter referred to as "head play content") to be first played among the plural content to be continuously played, using the first play list 151 generated by the first play list generation part 113. The acceptance part 114 accepts an instruction for setting any one content as the head play content by operating the UI part 12 through the user.

Also, the acceptance part 114 accepts a change instruction for changing the play order described in the first play list 151. When the change instruction is accepted, the first play list generation part 113 generates (that is, updates) the first play list 151 reflecting the substance of the change instruction. The change instruction is, for example, to reverse the play order of one content and another content, or not to play a certain content. That is, the change instruction is to change the play order determined on the basis of the sort information 251 to another play order.

The transmission control part 115 supplies the play instruction to the radio communication part 13 so as to designate the head play content accepted by the acceptance part 114 and transmit the play instruction for the plural content. In this example, the play instruction includes information for designating the heat play content and information for designating the content to be continuously played.

A function corresponding to the play instruction transmission unit of the invention is realized by the cooperation of the transmission control part 115 and the radio communication part 13.

FIG. 7 is a functional block diagram illustrating a functional configuration realized by the control part 21 in the content play device 20. The control part 21 executes the program to realize functions corresponding to a second rule acquisition part 211, a play instruction acquisition part 212, a second attribute information acquisition part 213, a second play list generation part 214, and a play part 215.

The second rule acquisition part 211 corresponds to a second rule acquisition unit (rule acquisition unit) of the invention, and acquires information indicative of a rule to be followed in determining the play order of the plural content to be continuously played. In this example, the second rule acquisition part 211 reads and acquires the sort information 251 from the storage part 25. That is, the second rule acquisition part 211 and the above-mentioned first rule acquisition part 112 represent a rule common to the radio communication terminal 10 and the content play device 20, and acquires the sort information 251 shared by both of those devices.

The play instruction acquisition part 212 corresponds to a play instruction acquisition unit of the invention. When the play instruction transmitted from the radio communication part 13 under the control of the transmission control part 115 is received by the radio communication part 22, the play instruction acquisition part 212 acquires the received play instruction.

The second attribute information acquisition part 213 corresponds to a second attribute information acquisition unit (attribute information acquisition unit) of the invention, and acquires the attribute information indicative of the attribute of the content to be played by the content play device 20. In this example, the second attribute information acquisition part 213 acquires the attribute information on the content to be played, which has been designated according to the play instruction.

The second play list generation part 214 corresponds to a second play list generation unit (play list generation unit) of the invention. The second play list generation part 214 lists the plural content to be continuously played in the play order in conformity to the rule indicated by the sort information 251 acquired by the second rule acquisition part 211, on the basis of the play instruction acquired by the play instruction acquisition part 212, and the attribute information acquired by the second attribute information acquisition part 213, to generate the second play list 252. For example, when the content of the artist having the artist identifier "PQR" illustrated in FIG. 5 is continuously played, the second play list generation part 214 generates the second play list 252 having the substance illustrated in FIG. 9. Also, the second play list generation part 214 updates the second play list 252 reflecting the substance of the change instruction designated by the play instruction as needed.

The play part 215 corresponds to a play unit of the invention. The play part 215 acquires the plural content to be continuously played from the content server 30 in the play order conforming to the second play list 252 with the start of the head play content, on the basis of the play instruction acquired by the play instruction acquisition part 212, and sequentially plays the acquired content. For example, in the case of the second play list 252 having the substance illustrated in FIG. 9, the play part 215 continuously plays the content in a stated play order of the content identifiers "A1", , "A2", ... "A13", "D1", "D2", ... "D11", "G1", ... "G13", .... The play part 215 generates, during the continuous play, a music signal corresponding to the content acquired from the content server 30 to output the music signal to the speaker 24, and allows the speaker 24 to emit a sound according to the music signal.

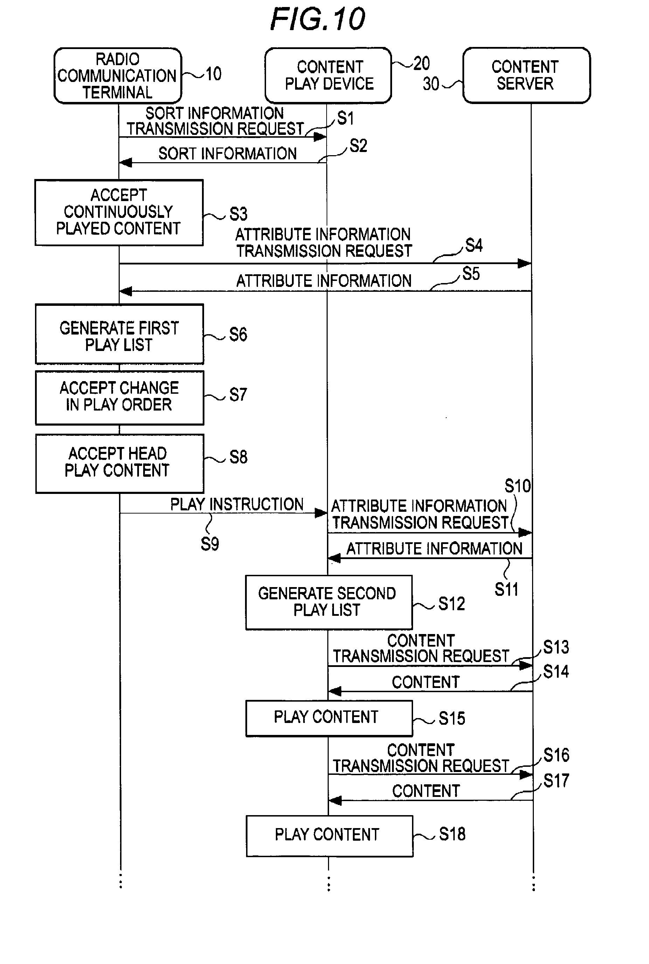

FIG. 10 is a sequence chart illustrating a flow of processing in the content play system 1.

The user of the radio communication terminal 10 operates the UI part 12, and issues an instruction to start an application program for playing the content. In response to the instruction, the control part 11 reads and executes the application program, and first searches the content play devices 20 communicatable with the subject terminal 10 by radio through the radio communication part 13, and displays a list of the radio communicatable content play devices 20 on the UI part 12. When the UI part 12 is operated by the user to designate any content play device 20, the control part 11 subsequently executes the following processing steps so as to allow the designated content play device 20 to play the content.

The control part 11 requests the content play device 20 to transmit the sort information 251 through the radio communication part 13 (Step S1). Upon receiving a transmission request for the sort information 251 through the radio communication part 22, the control part 21 in the content play device 20 reads the sort information 251 from the storage part 25, and transmits the sort information 251 to the radio communication terminal 10 (Step S2). Upon receiving the sort information 251 from the radio communication part 13, the control part 11 in the radio communication terminal 10 stores the sort information 251 in the memory or the storage part 15.

Both of the radio communication terminal 10 and the content play device 20 subsequently generate the play list according to the sort information 251. An agreement for determining the play order of the content in conformity to the rule common to the radio communication terminal 10 and the content play device 20 is completed through the processing of Steps S1 and S2.

Subsequently, the control part 11 accepts the operation of designating the content to be continuously played (Step S3). The control part 11 accepts the operation of designating the content to be played through the UI part 12, for example, on the artist basis or the album etc. basis. In this example, it is assumed that the control part 11 accepts the instruction for the continuous play of the content related to the artist having the artist identifier "PQR" illustrated in FIG. 5.

The control part 11 may accept the designation of the content to be continuously played on the content basis, and in short, accepts the designation by which the range of the content to be continuously played can be specified.

Subsequently, the control part 11 requests the content server 30 to transmit the attribute information on the content to be played through the radio communication part 13 (Step S4) . In this example, the control part 11 requests the content server 30 to transmit the attribute information on the content to be played, which has been accepted in the processing of Step S3. For example, upon receiving the transmission request for the attribute information through the content play device 20, the control part 31 of the content server 30 reads corresponding attribute information from the attribute information DB 332, and transmits the read attribute information to the radio communication terminal 10 (Step S5).

Subsequently, the control part 11 lists the content to be continuously played, in conformity to the rule indicated by the sort information 251 acquired in the processing of Step S2 on the basis of the attribute information acquired in the processing of Step S5, and generates the first play list 151 (Step S6). In this example, the control part 11 generates the first play list 151 having the substance illustrated in FIG. 8 on the basis of the sort information 251. The control part 11 stores the generated first play list 151 in the storage part 15.

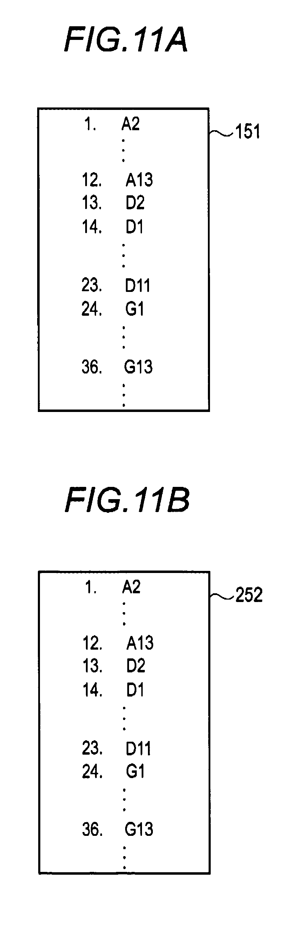

Subsequently, the control part 11 accepts the change instruction for changing the play order designated by the first play list 151 (Step S7). In this example, upon receiving the change instruction by the operation of the UI part 12, the control part 11 updates the substance of the first play list 151 so that the play order conforms to the substance of the change instruction. In this example, it is assumed that the control part 11 accepts the change instruction for the play order that the content of the content identifier "A1" is not played, and the play order of the content of the content identifiers "D1" and "D2" is reversed. In this case, the control part 11 reflects the substance of the change instruction, and updates the substance of the first play list 151 so as to provide the substance illustrated in FIG. 11A. As a result, the play order is changed so that the head play content is changed from the content of the content identifier "A1" to the content of the content identifier "A2", and the content of the content identifier "D2" is played in advance of the content of the content identifier "D1".

Subsequently, the control part 11 accepts the operation of designating the head play content from the UI part 12 (Step S8). For example, the control part 11 allows the UI part 12 to display the substance of the first play list 151 read from the storage part 15, and the user to designate any content in the list. In this example, it is assumed that the control part 11 accepts the operation of designating the content of the content identifier "A2".

Then, the control part 11 transmits the play instruction for designating the head play content accepted in the processing of Step S8 to the content play device 20 through the radio communication part 13 (Step S9). In this example, when the control part 11 accepts the change instruction for the play order in the processing of Step S7, the control part 11 transmits the play instruction for designating the substance of the change instruction in addition to the head play content to the content play device 20.

The play instruction includes the instruction for designating the content to be continuously played on the album etc. basis, the artist basis, or the content basis according to the substance accepted in the processing of Step S3, but may not include the instruction for designating the play order.

The above description is given of the processing executed by the radio communication terminal 10 during the continuous play of the content.

The control part 21 of the content play device 20 receives the play instruction transmitted from the radio communication terminal 10 through the radio communication part 22, and acquires the play instruction. Then, the control part 21 transmits an attribute information transmission request for the content to be played to the content server 30 by the network communication part 23 (Step S10). In this example, the control part 21 issues a request for transmission of the attribute information on the content accepted as a play target in the processing of Step S3, and therefore issues a request for transmission of the same attribute information as that of the radio communication terminal 10. Upon receiving the transmission request for the attribute information from the network communication part 32, the control part 31 of the content server 30 reads corresponding attribute information from the attribute information DB 332, and transmits the read attribute information to the content play device 20 (Step S11). As a result, the control part 21 acquires the attribute information received from the content server 30.

Subsequently, the control part 21 generates the second play list 252 in which the content is listed in conformity to the rule indicated by the sort information 251, on the basis of the play instruction acquired from the radio communication terminal 10 and the attribute information acquired from the content server 30 (Step S12). In this example, the control part 21 determines the play order of the content to be continuously played under the rule indicated by the sort information 251. Also, if the substance indicative of the change instruction for the play order are included in the play instruction, the control part 21 generates the second play list 252 reflecting the included substance. In this example, the control part 21 generates the second play list 252 so as to provide the substance illustrated in FIG. 11B. The control part 21 stores the generated second play list 252 in the storage part 15.

Through the processing of Step S12, the substance of the first play list 151 held by the radio communication terminal 10 are common to those of the second play list 252 held by the content play device 20.

Subsequently, the control part 21 acquires the plural content to be continuously played from the content server 30 in the play order conforming to the second play list 252 with the start of the head play content designated by the play instruction acquired from the radio communication terminal 10, and sequentially plays the acquired content. During this operation, the control part 21 displays the information on the display part 26 according to the attribute indicated by the acquired attribute information such as the total number of content to be continuously played or the name of the content that is being played.

First, the control part 21 requests the content server 30 to transmit the content of track number "2" in the music album having the album etc. identifier "ABC" through the network communication part 23 so as to play a first content described in the second play list 252 (Step S13). Upon receiving the transmission request for the content through the network communication part 32, the control part 31 of the content server 30 reads a corresponding content from the content DB 331, and transmits the read content to the content play device 20 in a streaming format (Step S14). Upon receiving the content of the track number "2" in the music album having the album etc. identifier "ABC", which has been transmitted in the streaming format, through the network communication part 23, the control part 21 generates the music signal, and outputs the music signal to the speaker 24 to play the content (Step S15).

Then, when a play end time of the content of the track number "2" in the music album having the album etc. identifier "ABC" approaches, the control part 21 requests the content server 30 to transmit the content of track number "3" in the same album through the network communication part 23 so as to play second content described in the second play list 252 (Step S16).

Since there is a possibility that the content to be played is changed by operating the UI part 12 of the radio communication terminal 10, it is preferable to issue a request for transmission of new content in the vicinity of the play end time of the content, for example, a given period before the content play end.

Upon receiving the transmission request for the content through the network communication part 32, the control part 31 of the content server 30 reads a corresponding content from the content DB 331, and transmits the read content to the content play device 20 in the streaming format (Step S17). Upon receiving the streamed content of the track number "3" in the music album having the album etc. identifier "ABC" through the network communication part 23, the control part 11 plays the content (Step S18).

Similarly, in the subsequent processing, the content is continuously played by the content play device 20 in the play order conforming to the second play list 252 with communication between the content play device 20 and the content server 30. Upon completion to play the content of the content identifier "A13" in the music album having the album etc. identifier "ABC", the content play device 20 executes the processing in the above procedure so as to subsequently play the content within the music album having the album etc. identifier "DEF". Then, when the content play device 20 completes the play of the content of the content identifier "D11" in the same album, the content play device 20 executes the processing in the above procedure so as to subsequently play the content within the play list of the album etc. identifier "GHI".

If the head play content accepted in the processing of Step S8 by the control part 11 has the content identifier "A3", the content play device 20 may not play the content of the content identifier "A2", or may play the content of the content identifier "A2" after the content of a content identifier "A13". In brief, the content play device 20 plays the content in the play order conforming to the second play list 252 as a general rule, but may not be configured so that all of the content is played in the play order conforming to the second play list 252.

Also, when the radio communication terminal 10 transmits the play instruction for instructing the continuous play over a plurality of artists to the content play device 20, the content related to an artist identifier "STU" is continuously played after the content related to the artist identifier "PQR" has been continuously played in the content play device 20. Even if this continuous play is realized, the radio communication terminal 10 can issue an instruction for the continuous play over the plurality of artists by conducting the play instruction in the processing of Step S9.

The continuous play in the content play device 20 does not include the processing of the radio communication terminal 10 as indicated in Step S9 and subsequent steps of FIG. 10. Hence, even if, for example, a power supply of the radio communication terminal 10 turns off, or the radio communication terminal 10 moves to a place in which the radio communication terminal 10 cannot wirelessly communicate with the content play device 20, the continuous play is realized with the substance of the first play list 151 by the content play device 20. Also, even if the number of content whom the user intends to play becomes enormous, there is no need for the user to designate those content point by point. Therefore, even if the user intends to play a large number of content, a load of the designation is not excessive.

In the content play system 1 according to this embodiment described above, the radio communication terminal 10 and the content play device 20 share the information indicative of the rule to be followed in determining the play order of the plural content. As a result, if the radio communication terminal 10 side merely transmits the head play content and the play instruction for designating the substance of the change instruction, the continuous play of the content can be realized with the common substance of the first play list 151 and the second play list 252. Hence, if the radio communication terminal 10 merely transmits the play instruction to the content play device 20 prior to the continuous play of the content, the radio communication terminal 10 can complete all the instructions for the continuous play of the content. Accordingly, according to the content play system 1, the continuous play of the content can be realized by the content play device 20 while suppressing an increase in the communication volume between the radio communication terminal 10 and the content play device 20.

### (Modified Examples)

The invention can be implemented in modes different from the above-mentioned embodiment. Also, the modified examples described below may be appropriately combined with each other.

### (First Modified Example)

In the above-mentioned embodiment, in the configuration where the content play device 20 stores the sort information 251 therein, the content play device 20 refers to the sort information 251 within the content play device 20, and the radio communication terminal 10 refers to the sort information 251 acquired from the content play device 20 so that the substance of the play lists in both those devices match each other. Instead, the radio communication terminal 10 may be configured to store the sort information 251 therein. In this case, the radio communication terminal 10 refers to the sort information 251 within the radio communication terminal 10, and the content play device 20 refers to the sort information 251 acquired from the radio communication terminal 10 so that the substance of the play lists in both those devices match each other. Also, in the content play system 1, a device other than the radio communication terminal 10 and the content play device 20 may store the sort information 251 therein, and both of the radio communication terminal 10 and the content play device 20 may acquire the sort information 251 from that device. In brief, the radio communication terminal 10 and the content play device 20 may indicate the common rule in both devices, and acquire the information indicative of the rule shared by both devices so as to determine the play order of the content to be continuously played in conformity to the common rule in both devices.

### (Second Modified Example)

In the above-mentioned embodiment, the content server 30 has both of the content DB 331 and the attribute information DB 332. Alternatively, the content server 30 may have only the content DB 331, and another device may have the attribute information DB 332. Even with this configuration, if both of the radio communication terminal 10 and the content play device 20 access to the attribute information DB to acquire the attribute information, the same advantages as those in the above-mentioned embodiment are obtained.

### (Third Modified Example)

In the above-mentioned embodiment, in the content play system 1, the plurality of content stored in one content server 30 is continuously played. Alternatively, the content may be continuously played over a plurality of servers. When the content designated as the play target is spanned over the plurality of servers, the continuous playback may be realized in conformity to the play order designated by the sort information 251 for each server.

Also, the management structure of the content illustrated in FIG. 5 is just an example. Hence, for example, the artist identifiers are ignored, and in all of the albums, the play order may be an alphabetical order or the order of the Japanese syllabary. How to determine the play order can be variously modified. Also, the attribute indicated by the attribute information is also an example, and other information may be included. In brief, the attribute information according to the invention may indicate the attribute referred to in determining the play order of the content to be continuously played in the content play system 1.

Also, in the content server 30, the play order determined by default may be determined in any manner. For example, the play order may be not the track number order in each album, but may be determined so that the titles are sorted in the alphabetical order or the order of the Japanese syllabary.

### (Fourth Modified Example)

In the above-described embodiment, the radio communication terminal 10 may conduct display corresponding to the substance of the first play list 151 while continuously playing the content in the content play device 20. More specifically, the control part 11 displays the name of the content which is being presently played by the content play device 20 with the use of the first play list 151. A play time of each content is included in the attribute information in advance so that the radio communication terminal 10 can estimate the time when the play content is switched by referring to the play time. Therefore, even if the radio communication terminal 10 does not communicate with the content play device 20, the radio communication terminal 10 can specify the content that is being played with the use of the first play list 151 and the play time.

### (Fifth Modified Example)

The content in the above-mentioned embodiment is related to the music. However, the substance of the content according to the invention is not particularly limited. For example, the content of the invention may represent images such as a moving picture or a still picture, or may represent both of the music and the image. In this case, the content play device 20 generates an image signal from the content acquired from the content server 30, and outputs the generated image signal to an external monitor as a process of playing the content.

Also, the content server 30 may not transmit the content in the streaming format, but the content play device 20 may play the content while downloading data like progressive download. In brief, the content play device 20 may play the content that has been already acquired while acquiring the content.

### (Sixth Modified Example)

The control device according to the invention may be a terminal other than the smartphone. For example, the control device may be various devices that enable communication such as cellular phones, PDA (personal digital assistant), mobile computers, or remote controllers. The play device according to the invention may be a device other than an audio player. For example, the play device may be any play device that can play the delivered content such as personal computers, speakers, stereos, TV sets. Also, the content play system according to the invention may not correspond to a so-called network AV system. The content play system may be any system having the play device that plays the content acquired from a storage device, and the control device that controls the play device through communication.

Also, the storage device the invention is not limited to an external device from the viewpoint of the play device of the invention, but may be, for example, an internal device from the viewpoint of the play device. If the play device plays the content while acquiring the content from the storage device in conformity to the second play list, control by the control device may not be mediated. As a result, the continuous play of the content can be realized.

In the above-mentioned embodiment, the content play device 20 realizes the second play list generation part 214, and the second play list generation part 214 generates the second play list 252. On the contrary, the content play device 20 may not generate the second play list 252 if the content play device 20 specifies the content to be played on the basis of the play instruction, and determines the play order of the content in conformity to the rule common to the radio communication terminal 10. In this case, it is not necessary that the control part 21 of the content play device 20 realize a function corresponding to the second play list generation part 214.

In the above-mentioned embodiment, the radio communication terminal 10 accepts the operation of designating the content to be continuously played. Instead, the content play device 20 may accept the operation of designating the content to be continuously played. In this case, since the content play device 20 can specify the content to be continuously played on the basis of the operation of specifying the content, the radio communication terminal 10 may not allow the information for designating the content to be continuously played to be included in the play instruction.

### (Seventh Modified Example)

The programs to be executed by the control part 11 of the radio communication terminal 10 or the control part 21 of the content play device 20 in the above-mentioned embodiment can be provided in a state where the programs are recorded in a computer readable recording medium such as a magnetic recording medium (magnetic tape, magnetic disc (HDD, FD)), an optical recording medium (optical disc (CD, DVD)), a magnetooptical medium, or a semiconductor memory. Also, the programs can be downloaded on a network such as the internet. Also, the functions to be realized by the control part 11 or the control part 21 may be realized by one or plural software, or one or plural hardware.

## Claims

1. A content play system, comprising:
a play device that acquires content stored in a storage device to play the content; and
a controller that controls the play device through communication,
wherein the controller includes:
a first attribute information acquisition unit that acquires attribute information indicative of an attribute of the content to be played by the play device;
a first rule acquisition unit that acquires rule information indicative of a rule to be followed in determining a play order of a plurality of content to be played by the play device;
a first play list generation unit that generates a first play list in which the plurality of content is listed in the play order according to the rule indicated by the rule information acquired by the first rule acquisition unit, on the basis of the attribute information acquired by the first attribute information acquisition unit;
an acceptance unit that accepts operation for designating the content to be first played with the use of the first play list generated by the first play list generation unit; and
a play instruction transmission unit that designates the content to be first played, which has been accepted by the acceptance unit, and transmits a play instruction for the plurality of content, and
wherein the play device includes:
a second rule acquisition unit that acquires the rule information indicative of a rule common to that acquired by the first rule acquisition unit;
a play instruction acquisition unit that acquires a play instruction transmitted by the play instruction transmission unit;
a second attribute information acquisition unit that acquires attribute information indicative of an attribute of the content to be played according to the play instruction acquired by the play instruction acquisition unit; and
a play unit that sequentially acquires and plays the plurality of content in the play order according to the rule indicated by the rule information acquired by the second rule acquisition unit with the start of the designated content to be first played, on the basis of the attribute information acquired by the second attribute information acquisition unit.

2. The content play system according to claim 1, wherein the play device further includes a second play list generation unit that generates a second play list in which the plurality of content is listed in a play order conforming to the common rule, on the basis of the attribute information acquired by the second attribute information acquisition unit, and
wherein the play unit sequentially acquires and plays the plurality of content in the play order conforming to the second play list generated by the second play list generation unit with the start of the content to be first played.

3. The content play system according to claim 1 or 2,
wherein the acceptance unit accepts a change instruction for changing the play order in addition to the content to be first played,
wherein the first play list generation unit generates the first play list reflecting substance of the change instruction,
wherein the play instruction transmission unit designates the substance of the change instruction in addition to the content to be first played, and transmits the play instruction, and
wherein the play unit sequentially plays the plurality of content in the play order reflecting the substance of the change instruction designated by the play instruction.

4. A controller for controlling a play device which acquires and plays content stored in a storage device through communication, the controller comprising:
an attribute information acquisition unit that acquires attribute information indicative of an attribute of the content to be played by the play device;
a rule acquisition unit that acquires rule information indicative of a rule common between the controller and the play device to be followed in determining a play order of a plurality of content to be played by the play device, and shared by the controller and the play device;
a play list generation unit that generates a play list in which the plurality of content is listed in a play order in conformity to the rule indicated by the rule information acquired by the rule acquisition unit, on the basis of the attribute information acquired by the attribute information acquisition unit;
an acceptance unit that accepts operation for designating the content to be first played with the use of the play list generated by the play list generation unit; and
a play instruction transmission unit that designates the content to be first played, which has been accepted by the acceptance unit, and transmits a play instruction for the plurality of content.

5. A play device that is controlled by a controller through communication, and acquires and plays content stored in a storage device under the control, the play device comprising:
a rule acquisition unit acquires rule information indicative of a rule common between the controller and the play device to be followed in determining a play order of a plurality of content to be played by the play device, and shared by the controller and the play device;
a play instruction acquisition unit that acquires, when content to be first played is designated by the controller with the use of a play list in which the plurality of content is listed in a play order in conformity to the common rule, a play instruction designating the content to be first played from the controller;
an attribute information acquisition unit that acquires attribute information indicative of an attribute of the content to be played according to a play instruction acquired by the play instruction acquisition unit;
a play list generation unit that generates the play list in which the plurality of content is listed in the play order in conformity to the common rule, on the basis of the attribute information acquired by the attribute information acquisition unit; and
a play unit that sequentially acquires and plays the plurality of content in the play order conforming to the play list generated by the play list generation unit with the start of the designated content to be first played.
